(19) Europäisches Patentamt
European Patent Office
Office européen des brevets

(11) EP 2 348 853 B1

(12) **EUROPEAN PATENT SPECIFICATION**

(45) Date of publication and mention of the grant of the patent:
**19.08.2015 Bulletin 2015/34**

(21) Application number: **09741262.1**

(22) Date of filing: **06.10.2009**

(51) Int Cl.:
***A01N 25/04** (2006.01)* ***A01N 25/10** (2006.01)*
***A01N 25/30** (2006.01)* ***A01N 43/36** (2006.01)*
***A01N 43/40** (2006.01)* ***A01N 47/04** (2006.01)*
***A01N 59/16** (2006.01)* ***C09D 5/16** (2006.01)*
***A01P 1/00** (2006.01)*

(86) International application number:
**PCT/EP2009/062957**

(87) International publication number:
**WO 2010/040738 (15.04.2010 Gazette 2010/15)**

(54) **HIGH SOLID DISPERSIONS COMPRISING BIOCIDES**

BIOZIDHALTIGE DISPERSIONEN MIT HOHEM FESTSTOFFANTEIL

DISPERSIONS TRÈS SOLIDES COMPRENANT DES BIOCIDES

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **08.10.2008 EP 08166097**

(43) Date of publication of application:
**03.08.2011 Bulletin 2011/31**

(73) Proprietor: **Janssen Pharmaceutica N.V.**
**2340 Beerse (BE)**

(72) Inventors:
- **BARKER, Martyn, Charles**
**B-2340 Beerse (BE)**
- **VERHEYEN, Dimitri, Dennis, Paul**
**B-2340 Beerse (BE)**

(74) Representative: **Verberckmoes, Filip Gerard**
**Janssen Pharmaceutica N.V.**
**J&J Patent Law Department**
**Turnhoutseweg 30**
**2340 Beerse (BE)**

(56) References cited:
**WO-A-03/039256** **US-A- 5 098 473**
**US-A- 5 328 928**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 348 853 B1

## Description

The present invention relates to dispersions comprising a biocide selected from tralopyril, zinc pyrithione or tolylfluanid, or a combination of thereof, a polymeric surfactant, an anti-settling agent and one or more carrier liquids. These dispersions have a solids level in an amount from 30% to 80% by weight and provide a zero-dust delivery system when used in antifouling coating formulations.

Biocides such as tralopyril and zinc pyrithione are well known compounds useful in a wide variety of applications as an antibacterial, antifungal or antifouling agent. These biocides are usally sold as dry powder for use in paints and coatings. A disadvantage of such dry powder is that it generates dust during handling thereby necessitating special handling equipment as these biocides can cause irritation to a worker's finger or hands upon contact. Also workers have to put on suitable protective equipments such as dust preventive masks, protective glasses, protective gloves, protective clothes and the like during handling of these compounds. In addition, a local exhaust system is typically installed so as not to contaminate the work environment with the powder dust generated when handling these biocides.

Tralopyril has a $LD_{50}$ of 28.7 mg/kg for acute oral mammalian toxicity by oral digestion and zinc pyrithione has a $LC_{50}$ (4h) of 1,03 mg/L for acute inhalation toxicity. Given these problems when handling biocides in dry powder form the creation of a zero-dust delivery system was seen as beneficial.

WO-2003/039256 discloses synergistic antifouling compositions comprising tralopyril and a biocide selected from bethoxazin, tolylfluanide, dichlofluanide, or DCOIT. US-5,098,473 discloses a gellation inhibited antifouling paint comprising the biocides zinc pyrithione and cuprous oxide, and optional swelling agents such as bentonite. US-5,328,928 discloses the pesticidal agent tolylfluanid and teaches suspension concentrates comprising tolylfluanid formulated in aromatic solvents further comprising an anionic surfactants and a nonionic surfactant

A zero-dust delivery system for use by paint or coating companies is preferably a liquid delivery system that releases no dust in the air, allows for easy handling, is highly concentrated and is also storage stable and easily pourable.

Such a liquid delivery system for the biocides tralopyril, zinc pyrithione and tolylfluanid has been found to comprise of the following :

- a biocide selected from tralopyril, zinc pyrithione, or tolylfluanid, or a combination thereof, in an amount from 30% to 80% by weight based on the total weight of the dispersion,
- a polymeric surfactant;
- an anti-settling agent;
- a carrier liquid; and
- optional formulation agents such as fillers, binders, resins, etc.

Tralopyril is disclosed in EP-0,312,723-A for controlling molluscs and its use in antifouling compositions is disclosed in EP-0,746,979. Said compound is also known under its scientific name as 4-bromo-2-(4-chlorophenyl)-5-(trifluoromethyl)-1*H*-pyrrole-3-carbonitrile and is represented by the formula :

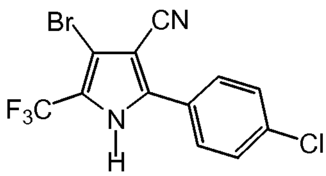

tralopyril

Zinc pyrithione, also known as zinc omadine, is a coordination complex first reported in the 1930s. It features two pyridine-derived chelating ligands bound to zinc via oxygen and sulfur atoms. Its IUPAC name is bis(2-pyridylthio)zinc 1,1'dioxide as is represented by the following formula :

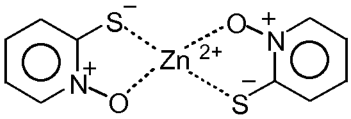

zinc pyrithione

Zinc pyrithione is best known for its use in treating dandruff and seborrheic dermatitis. Due to its low solubility in water it is suitable for use in outdoor paints and other products that provide protection against mildew and algae.

Tolylfluanid has a broad spectrum antimicrobial activity and is the generic name of the compound 1,1-dichloro-*N*-[(dimethylamino)sulfonyl]-1-fluoro-*N*-phenyl-methanesulfenamide, which compound is represented by the formula

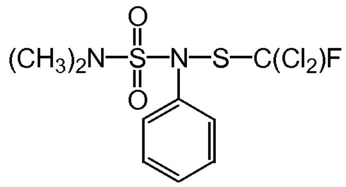

tolylfluanid

For the purposes of this invention, the term "dispersion" refers to a system of fine particles that are evenly distributed in a liquid medium. The term "surfactant" refers to a product for reducing interfacial tension of two boundary surfaces, thereby increasing the emulsifying, spreading, dispersability or wetting properties of liquids or solids. The term "anti-settling agents" refers to products used to keep fine particles in suspension.

Polymeric surfactants that are suitable for use in the dispersions of the present invention are :

- alkyd polyethylene glycols such as Atlox 4914 available from Croda; and
- ABA polyhydroxyester-PEG-polyhydroxyester copolymers such as Hypermer B246 and Zephrym PD2206 available from Croda.

Particularly preferred are polymeric surfactants which have the necessary approval for pesticide use. In the USA, for example, this would require EPA approval for pesticide use under lists such as "Inert ingredients permitted in pesticide products : non-food inert ingredients" or EPA lists such as 40 CFR § 180.910 "Inert ingredients used pre- and post-harvest; exemptions from the requirement of a tolerance", 40 CFR § 180.950 "Tolerance exemptions for minimal risk active and inert ingredients" or 40 CFR § 180.960 "Polymers; exemptions from the requirement of a tolerance".

Anti-settling agent that are suitable for use in the high solid dispersions of the present invention are fumed silica, calcium carbonate, modified castor oils, modified cellulose polymers, bentonite, hectorite or chemically modified derivatives. Optionally these anti-settling agents are used in combination with propylene carbonate as an activator.

Specific examples of these anti-settling agents are :

- Bentone 38 is quaternium 18-hectorite (CAS 12001-31-9) and is commercially available from Elementis Specialties;
- Bentone gel MIO V is a mixture of quaternium 18-hectorite (CAS 12001-31-9) and propylene carbonate in a mineral oil and is commercially available from Elementis Specialties;
- Tixogel MIO-1584 is a mixture of quaternium 90-bentonite (CAS 226226-22-8) with propylene carbonate and a mineral oil and is commercially available from Sud-Chemie;
- fumed silica (also known as pyrogenic silica); and
- ultrafine calcium carbonate.

Alternatively, depending on the carrier liquid employed, other chemical types of anti-settling agent may be employed such as :

- Ircothix 2000 is a carboxylate gel-based rheological agent available from Lubrizol Advanced Materials;
- Crayvallac CVP a hydrogenated castor oil-based rheological agent; and
- Rhodapol 23 a xanthan gum.

Carrier liquids that are suitable for use in the high solid dispersions of the present invention are isoparaffinic solvents, dearomatized aliphatic hydrocarbon fluids, heavy aromatic hydrocarbons, paraffin oils, toluene, ethylbenzene, trimethylbenzene, xylene, diisononyl phthalate and propylene oxide polyether polyols, or mixtures thereof. A particular group of carrier liquids are isoparaffinic solvents, dearomatized hydrocarbon fluids, heavy aromatic hydrocarbons, paraffin oils, xylene, diisononyl phthalate, and propylene oxide polyether polyols.

Specific examples of such carrier liquids are :

- isoparaffinic solvents available from ExxonMobil as Isopar C, E, G, H, K, L, M and V;
- dearomatized aliphatic hydrocarbon fluids available from ExxonMobil under the tradename Exxsol such as Exxsol Pentane 80, Exxsol penthylpentane naphta, Exxsol hexane, Exxsol heptane, Exxsol isopentane S, Exxsol isohexane, Exxsol cyclopentane S, Exxsol D30, Exxsol D40, Exxsol D50, Exxsol D60, Exxsol D80, Exxsol D95, and the like;
- heavy aromatic hydrocarbons available from ExxonMobil under the tradename Solvesso such as Solvesso 100, Solvesso 150, naphthalene depleted Solvesso 150, Solvesso 200, naphthalene depleted Solvesso 200, Solvesso 200 S, and the like;
- paraffin oils available from from Petrochem Carless under the tradename Brisopar;
- alkylbenzenes such as toluene, ethylbenzene, trimethylbenzene and xylene;

- DINP (diisononyl phthalate); and
- propylene oxide polyether polyols available as Voranol products from Dow Chemical, Lupranol from Elastogran or Jeffol polyols from Huntsman.

The term "carrier liquid" is to be understood both in the singular as the plural as mixtures of more than one carrier liquid are also intended to be covered by the term "carrier liquid".

Optional formulations agents are e.g. inert fillers which are used in the high solid dispersions of the present invention having a lower amount of biocide. Such inert fillers are e.g. talc. Other optional formulation agents are e.g. resins such as Indonesian gum rosin, binders such as Neocryl B-725; a solid acrylic (BMA/MMA) copolymer available from DSM Neoresins.

Accordingly the invention provides a dispersion comprising

a) a biocide selected from tralopyril, zinc pyrithione, or tolylfluanid, or combinations thereof in an amount from 30% to 80% by weight;
b) a polymeric surfactant selected from alkyd polyethylene glycols and ABA polyhydroxyester-PEG-polyhydroxyester copolymers, in an amount ranging from 0.5 to 10% by weight;
c) an anti-settling agent selected from fumed silica, calcium carbonate, modified castor oils, modified cellulose polymers, bentonite, hectorite, or chemically modified derivatives thereof, or mixtures thereof, and optionally propylene carbonate, in an amount ranging from 0.1 to 10 % by weight;
d) a carrier liquid selected from isoparaffinic solvents, dearomatized aliphatic hydrocarbon fluids, heavy aromatic hydrocarbons, paraffin oils, toluene, ethylbenzene, trimethylbenzene, xylene, diisononyl phthalate and propylene oxide polyether polyols, or mixtures thereof; and
e) optionally other formulation agents.

The dispersions of the present invention have a high solids level from 30% to 80% by weight of the total dispersion. In an embodiment the dispersions have a solids level ranging from 30 to 60% by weight.

The high solid dispersions of the present invention have a viscosity of a level that allows them to be used directly in the preparation of coatings or paints without the need to dilute said high solid dispersions. Preferably the viscosity of the high solid dispersions is less than 10000 mPa.s, more preferably less than 5000 mPa.s, when measured.

For simple Newtonian fluids the viscosity ($\eta$) is given from the ratio between applied shear stress ($\tau$) and the measured shear rate ($\gamma$) *i.e.*

$$\eta = \tau / \dot{\gamma}$$

The systems described here, however, frequently display more complex shear thinning, pseudoplastic rheology where the viscosity is dependent on the applied shear rate. The values quoted above were determined by measuring the viscosity at a range of shear rates and extrapolating to obtain the flow viscosity at the limiting Newtonian high-shear plateau by fitting the viscosity data to the Casson equation as has been described in "Dispersion of Powders in Liquids. Third Edition. Parfitt 1981 Applied Science Publishers ISBN 0-85334-990-8".

$$\tau^{0.5} = \tau_0^{0.5} + A.(\dot{\gamma}^{0.5})$$

where $\tau_0$ is the so-called yield value which is the force which needs to be applied before the sample begins to move and A is a constant dependent upon the system being measured.

The amount of surfactant ranges from 0.5 to 10% by weight.

The amount of anti-settling agent ranges from 0.1 to 10% by weight, or from 0.1 to 5% by weight.

## Typical formulation examples :

Formulation 1 :

Formulation 1 was prepared by melting the polymeric surfactant Hypermer B246 at a temperature of approximately 60°C and by mixing it with the carrier liquid Exxsol D80 until a clear homogenous solution was obtained. Then the tolylfluanid powder and the anti-settling agent Bentone gel MIO-V were added successively whereby each time the dispersion was homogenised using disc impellor mixing before adding the following component.

| Component: | Product: | Amount (%w/w) |
|---|---|---|
| Biocide | tolylfluanid | 45.00 |
| Polymeric surfactant | Hypermer B246 | 4.50 |
| Anti-settling agent | Bentone gel MIO-V | 7.50 |
| Carrier liquid | Exxsol D80 | 43.00 |

Formulation 2 :

Formulation 2 was prepared by melting the polymeric surfactant Hypermer B246 at a temperature of approximately 60°C and by mixing it with the carrier liquid Exxsol D80 under constant stirring until a clear homogenous solution was obtained. Then tralopyril powder and the anti-settling agent Bentone 38 were added successively whereby each time the dispersion was homogenised using disc impellor mixing before adding the following component. To activate the Bentone 38, propylene carbonate was added while high shearing the formulation using a rotor-stator mixer

| Component: | Product: | Amount (%w/w) |
|---|---|---|
| Biocide | tralopyril | 60.00 |
| Polymeric surfactant | Hypermer B246 | 6.30 |
| Anti-settling agent | Bentone 38 | 1.00 |
| Carrier liquid | Exxsol D80 | 32.37 |
| Activator | propylene carbonate | 0.33 |

Formulation 3 :

Formulation 3 was prepared by liquidizing the polymeric surfactant Atlox 4914 at a temperature of approximately 60°C and by mixing it with the carrier liquid Exxsol D60 under constant stirring until a clear homogenous solution was obtained. Then the zinc pyrithione powder, the tralopyril powder and the anti-settling agent Bentone gel MIO V were added successively whereby each time the dispersion was homogenised using disc impellor mixing before adding the following component.

| Component: | Product: | Amount (%w/w) |
|---|---|---|
| Biocide 1 | tralopyril | 26.04 |
| Biocide 2 | zinc pyrithione | 26.04 |
| Polymeric surfactant | Atlox 4914 | 4.17 |
| Anti-settling agent | Bentone gel MIO V | 8.33 |
| Carrier liquid | Exxsol D60 | 35.42 |

Formulation 4 :

Formulation 4 was prepared by mixing the polymeric surfactant Zephrym PD 2206 with the carrier liquid composed of a mixture of xylene and Isopar K under constant stirring until a clear homogenous solution is obtained. Then tralopyril powder and the anti-settling agent Bentone 38 were added successively whereby each time the dispersion is homogenised using disc impellor mixing before adding the following component. To activate the Bentone 38, propylene carbonate was added while high shearing the formulation using a rotor-stator mixer.

| Component: | Product: | Amount (%w/w) |
|---|---|---|
| Biocide | tralopyril | 59.00 |
| Polymeric surfactant | Zephrym PD2206 | 4.00 |

(continued)

| Component: | Product: | Amount (%w/w) |
|---|---|---|
| Anti-settling agent | Bentone 38 | 1.20 |
| Carrier liquid | Isopar K | 28.40 |
| Carrier liquid | xylene | 7.00 |
| Activator | propylene carbonate | 0.40 |

Formulation 5 :

Formulation 5 was prepared by melting the polymeric surfactant Hypermer B246 at a temperature of approximately 60°C and mixing it with the carrier liquid Isopar L under constant stirring until a clear homogenous solution is obtained. Then the zinc pyrithione powder and the anti-settling agent Bentone 38 were added successively whereby each time the dispersion was homogenised using disc impellor mixing before adding the following component. In order to activate the Bentone 38, propylene carbonate was added while shearing the formulation using a rotor-stator mixer. The talc was added to this mixture and the total system remixed with a disc impellor until a homogeneous dispersion was achieved.

| Component: | Product: | Amount (%w/w) |
|---|---|---|
| Biocide | zinc pyrithione | 30.00 |
| Polymeric surfactant | Hypermer B246 | 5.00 |
| Anti-settling agent | Bentone 38 | 1.50 |
| Carrier liquid | Isopar L | 31.00 |
| Activator | propylene carbonate | 0.50 |
| Additive | talc | 32.00 |

Formulation 6 :

Formulation 6 was prepared by liquidizing the polymeric surfactant Atlox 4914 at a temperature of approximately 60°C and mixing it with the carrier liquid Solvesso 150 n.d. under constant stirring until a clear homogenous solution is obtained. Then tralopyril powder and the anti-settling agent Bentone gel MIO V were added successively whereby each time the dispersion is homogenised using disc impellor mixing before adding the following component. Finally the Indonesian gum rosin was dissolved into the dispersion with constant mixing.

| Component: | Product: | Amount (%w/w) |
|---|---|---|
| Biocide | tralopyril | 51.00 |
| Polymeric surfactant | Atlox 4914 | 7.00 |
| Anti-settling agent | Bentone gel MIO V | 2.00 |
| Carrier liquid | Solvesso 150 n.d. | 20.00 |
| Other | Indonesian gum Rosin | 20.00 |

Comparative formulation 1 : no polymeric surfactant

Comparative formulation 1 was prepared by adding the tralopyril powder to the carrier liquid and homogenising using a disc impellor mixer.

| Component: | Product | Amount (%w/w) |
|---|---|---|
| Biocide | tralopyril | 52.00 |

(continued)

| Component: | Product | Amount (%w/w) |
|---|---|---|
| Carrier liquid | Exxsol D80 | 48.00 |

Comparative formulation 1 was a semi-liquid paste, stirrable, but not able to be poured properly. It was not possible to measure this formulation using an AR2000 rheometer from TAinstruments. Because the sample was not liquid-like enough, the instrument was not able to bring the spindle down to the required gap.

Comparative formulation 2 : no anti-settling agent

Comparative formulation 2 was prepared by melting the polymeric surfactant Hypermer B246 at a temperature of approximately 60°C and by mixing it with the carrier liquid Exxsol D80 under constant stirring until a clear homogenous solution was obtained. Then tralopyril powder was added and the dispersion homogenised using disc impellor mixing.

| Component: | Product: | Amount (%w/w) |
|---|---|---|
| Biocide | tralopyril | 60.00 |
| Polymeric surfactant | Hypermer B246 | 5.00 |
| Carrier liquid | Exxsol D80 | 33.67 |

Comparative formulation 2 was very liquid-like, pourable and could be handled using an AR2000 rheometer from TAinstruments.

Comparative formulation 3 : no polymeric surfactant

Comparative formulation 3 was prepared by adding the zinc pyrithione powder to the carrier liquid and homogenising using a disc impellor mixer.

| Component: | Product | Amount (%w/w) |
|---|---|---|
| Biocide | zinc pyrithione | 25.00 |
| Carrier liquid | Isopar M | 75.00 |

Comparative formulation 3 was a thixotropic liquid which could be handled by an AR2000 rheometer with a 4 cm 2° cone spindle from TA instruments. The formulation displayed a high casson yield value without containing any anti-settling agent.

Comparative formulation 4 : no anti-settling agent

Comparative formulation 4 is prepared by melting the polymeric surfactant Hypermer B246 at a temperature of approximately 60°C and by mixing it with the carrier liquid Isopar M under constant stirring until a clear homogenous solution was obtained. Then zinc pyrithione powder is added and the dispersion homogenised using disc impellor mixing.

| Component: | Product: | Amount (%w/w) |
|---|---|---|
| Biocide | zinc pyrithione | 25.00 |
| Polymeric surfactant | Hypermer B246 | 2.50 |
| Carrier liquid | Isopar M | 72.25 |

Comparative formulation 4 could not be handled by an AR2000 rheometer with a 4cm 2° cone spindle because the sample was so liquid that the cone could not be filled. Using the double concentric cylinder configuration on the AR2000 it was possible to measure this sample. Comparative formulation 4 has almost a Newtonian flow behaviour.

Comparative formulation 5 : no polymeric surfactant

Comparative formulation 5 was prepared by adding the zinc pyrithione powder to the carrier liquid and homogenising using a spatula.

| Component: | Product | Amount (%w/w) |
|---|---|---|
| Biocide | zinc pyrithione | 50.00 |
| Carrier liquid | Isopar M | 50.00 |

Comparative formulation 5 was a pasty solid which could not be mixed using a disc impellor mixer.

Comparative formulation 6 : no anti-settling agent

Comparative formulation 6 is prepared by melting the polymeric surfactant Hypermer B246 at a temperature of approximately 60°C and by mixing it with the carrier liquid Isopar M under constant stirring until a clear homogenous solution was obtained. Then zinc pyrithione powder is added and the dispersion homogenised using disc impellor mixing.

| Component: | Product: | Amount (%w/w) |
|---|---|---|
| Biocide | zinc pyrithione | 60.00 |
| Polymeric surfactant | Hypermer B246 | 6.00 |
| Carrier liquid | Isopar M | 34.00 |

Comparative formulation 6 is a very liquid-like dispersion which could be handled by an AR2000 rheometer

**Viscosity**

A TA Instruments AR2000 rheometer was employed for the rheological measurements normally using a 4cm 2° cone and plate configuration at 25°C (comparative example 4 was measured using a double concentric cylinder instead of a cone and plate configuration because of its low viscosity). The Casson flow viscosities and Casson yield values quoted below were determined by fitting the viscosity data to the Casson equation as has been described in "Dispersion of Powders in Liquids. Third Edition. Parfitt 1981 Applied Science Publishers ISBN 0-85334-990-8".

| Formulation | Casson Yield Value ($\tau_0$) **Pa** | Casson Flow Viscosity ($\gamma$) **Pa.s** |
|---|---|---|
| 1 | 2.888 | 0.06240 |
| 2 | 10.160 | 0.7900 |
| 3 | 25.72 | 0.2130 |
| 4 | 3.332 | 0.1261 |
| 5 | 16.170 | 0.08118 |
| 6 | 9.476 | 2.432 |
| Comparative example 1 | Not measurable | not measurable |
| Comparative example 2 | 3.094 E-6 | 0.08204 |
| Comparative example 3 | 2.868 | 8.900 E-3 |
| Comparative example 4 | 1.852 E-5 | 4.347 E-3 |
| Comparative example 5 | not measurable | not measurable |
| Comparative example 6 | 2.679 E-6 | 0.1401 |

**Storage stability**

The samples were stored in sealed glass vials at 40°C in a constant temperature cabinet and the degree of settling assessed on a regular basis by measuring the formation of a clear supernatant layer at the top of the sample. This was expressed as a percentage of the total height of the liquid and the values given after 31 days storage are noted in the table below. As can be seen, samples with little rheological structure and a low Casson yield values gave high rates of sedimentation.

| Formulation | % settling after 31 days storage at 40°C | Casson Yield Value ($\tau_0$) **Pa** |
|---|---|---|
| 1 | none | 2.888 |
| 2 | 1.00% | 10.160 |
| 3 | 4.95% | 25.72 |
| 4 | 4.20% | 3.332 |
| 5 | 2,22% | 16.170 |
| 6 | 8.51% | 9.476 |
| Comparative example 1 | n.a. | Not measurable |
| Comparative example 2 | 41.74% | 3.094 E-6 |
| Comparative example 3 | 6.06% | 2.868 |
| Comparative example 4 | 76.29% | 1.852 E-5 |
| Comparative example 5 | n.a. | not measurable |
| Comparative example 6 | 38.7% | 2.679 E-6 |

## Claims

**1.** A dispersion comprising

a) a biocide selected from tralopyril, zinc pyrithione, or tolylfluanid, or combinations thereof in an amount from 30% to 80% by weight;
b) a polymeric surfactant selected from alkyd polyethylene glycols and ABA polyhydroxyester-PEG-polyhydroxyester copolymers, in an amount ranging from 0.5 to 10% by weight;
c) an anti-settling agent selected from fumed silica, calcium carbonate, modified castor oils, modified cellulose polymers, bentonite, hectorite or chemically modified derivatives thereof, or mixtures thereof, and optionally propylene carbonate, in an amount ranging from 0.1 to 10 % by weight;
d) a carrier liquid selected from isoparaffinic solvents, dearomatized aliphatic hydrocarbon fluids, heavy aromatic hydrocarbons, paraffin oils, toluene, ethylbenzene, trimethylbenzene, xylene, diisononyl phthalate and propylene oxide polyether polyols, or mixtures thereof; and;
e) optionally other formulation agents.

**2.** The dispersion as claimed in claim 1 wherein the amount of biocide ranges from 30 to 60% by weight.

**3.** The dispersion as claimed in claim 1 wherein the biocide is tralopyril.

**4.** The dispersion as claimed in claim 1 wherein the biocide is zinc pyrithione.

**5.** The dispersion as claimed in claim 1 wherein the biocide is tolylfluanid.

**6.** The dispersion as claimed in any of the above claims wherein the amount of anti-settling agent ranges from 0.1 to 5% by weight.

**7.** The dispersion as claimed in any of the above claims wherein the polymeric surfactant is an alkyd polyethylene glycols.

8. The dispersion as claimed in any of the above claims wherein the polymeric surfactant is an ABA polyhydroxyester-PEG-polyhydroxyester copolymers.

9. The dispersion as claimed in any of the above claims wherein anti-settling agent is selected from quaternium 18-hectorite, a mixture of quaternium 18-hectorite and propylene carbonate, and a mixture of quaternium 90-bentonite with propylene carbonate

10. The dispersion according to any of the previous claims wherein the carrier liquid is selected from are isoparaffinic solvents, dearomatized hydrocarbon fluids, heavy aromatic hydrocarbons, paraffin oils, xylene, diisononyl phthalate, and propylene oxide polyether polyols.

11. The dispersion as claimed in claim 10 wherein the carrier liquid is selected from dearomatized aliphatic hydrocarbon fluids.

12. The dispersion according to any of the previous claims wherein the other formulation agents are selected from one or more inert fillers, resins or binders.

**Patentansprüche**

1. Dispersion, umfassend

   a) ein Biozid, ausgewählt aus Tralopyril, Zinkpyrithion oder Tolylfluanid oder Kombinationen davon, in einer Menge von 30 bis 80 Gew.-%;
   b) ein polymeres Tensid, ausgewählt aus Alkydpolyethylenglykolen und ABA-Polyhydroxyester-PEG-polyhydroxyester-Copolymeren, in einer Menge im Bereich von 0,5 bis 10 Gew.-%;
   c) ein Antiabsetzmittel, ausgewählt aus pyrogenem Siliciumdioxid, Calciumcarbonat, modifizierten Rizinusölen, modifizierten Cellulosepolymeren, Bentonit, Hectorit oder chemisch modifizierten Derivaten davon oder Mischungen davon, und gegebenenfalls Propylencarbonat in einer Menge im Bereich von 0,1 bis 10 Gew.-%;
   d) eine Trägerflüssigkeit, ausgewählt aus isoparaffinischen Lösungsmitteln, entaromatisierten aliphatischen Kohlenwasserstofffluiden, schweren aromatischen Kohlenwasserstoffen, Paraffinölen, Toluol, Ethylbenzol, Trimethylbenzol, Xylol, Diisononylphthalat und Propylenoxidpolyetherpolyolen oder Mischungen davon; und
   e) gegebenenfalls andere Formulierungsmittel.

2. Dispersion nach Anspruch 1, wobei die Biozidmenge im Bereich von 30 bis 60 Gew.-% liegt.

3. Dispersion nach Anspruch 1, wobei es sich bei dem Biozid um Tralopyril handelt.

4. Dispersion nach Anspruch 1, wobei es sich bei dem Biozid um Zinkpyrithion handelt.

5. Dispersion nach Anspruch 1, wobei es sich bei dem Biozid um Tolylfluanid handelt.

6. Dispersion nach einem der obigen Ansprüche, wobei die Menge an Antiabsetzmittel im Bereich von 0,1 bis 5 Gew.-% liegt.

7. Dispersion nach einem der obigen Ansprüche, wobei es sich bei dem polymeren Tensid um ein Alkydpolyethylenglykol handelt.

8. Dispersion nach einem der obigen Ansprüche, wobei es sich bei dem polymeren Tensid um ein ABA-Polyhydroxyester-PEG-polyhydroxyester-Copolymer handelt.

9. Dispersion nach einem der obigen Ansprüche, wobei das Antiabsetzmittel aus Quaternium-18-hectorit, einer Mischung von Quaternium-18-hectorit und Propylencarbonat und einer Mischung von Quaternium-90-bentonit mit Propylencarbonat ausgewählt ist.

10. Dispersion nach einem der vorhergehenden Ansprüche, wobei die Trägerflüssigkeit aus isoparaffinischen Lösungsmitteln, entaromatisierten Kohlenwasserstofffluiden, schweren aromatischen Kohlenwasserstoffen, Paraffinölen, Xylol, Diisononylphthalat und Propylenoxidpolyetherpolyolen ausgewählt ist.

11. Dispersion nach Anspruch 10, wobei die Trägerflüssigkeit aus entaromatisierten aliphatischen Kohlenwasserstofffluiden ausgewählt ist.

12. Dispersion nach einem der vorhergehenden Ansprüche, wobei die anderen Formulierungsmittel aus einem oder mehreren inerten Füllstoffen, Harzen oder Bindemitteln ausgewählt sind.

**Revendications**

1. Dispersion comprenant

    a) un biocide choisi parmi le tralopyril, la zinc pyrithione ou le tolylfluanid, ou leurs combinaisons, à une teneur comprise entre 30 % et 80 % en masse ;
    b) un tensioactif polymère choisi parmi les polyéthylènes glycol d'alkyde et les copolymères ABA polyhydroxyester-PEG-polyhydroxyester, à une teneur comprise entre 0,5 et 10 % en masse ;
    c) un agent anti-sédimentation choisi parmi la silice fumée, le carbonate de calcium, les huiles de ricin modifiées, les polymères de cellulose modifiés, la bentonite, l'hectorite ou ses dérivés chimiquement modifiés, ou leurs mélanges, et éventuellement du carbonate de propylène, à une teneur comprise entre 0,1 et 10 % en masse ;
    d) un liquide vecteur choisi parmi les solvants isoparaffiniques, les fluides hydrocarbonés aliphatiques désaromatisés, les hydrocarbures aromatiques lourds, les huiles de paraffine, le toluène, l'éthylbenzène, le triméthylbenzène, le xylène, le phtalate de diisononyle et les polyéther polyols d'oxyde de propylène, ou leurs mélanges ; et
    e) éventuellement d'autres agents de formulation.

2. Dispersion selon la revendication 1, où la teneur en biocide est comprise entre 30 et 60 % en masse.

3. Dispersion selon la revendication 1, où le biocide est le tralopyril.

4. Dispersion selon la revendication 1, où le biocide est la zinc pyrithione.

5. Dispersion selon la revendication 1, où le biocide est le tolylfluanid.

6. Dispersion selon l'une quelconque des revendications ci-avant, où la teneur en agent anti-sédimentation est comprise entre 0,1 et 5 % en masse.

7. Dispersion selon l'une quelconque des revendications ci-avant, où le tensioactif polymère est un polyéthylène glycol d'alkyde.

8. Dispersion selon l'une quelconque des revendications ci-avant, où le tensioactif polymère est un copolymère ABA polyhydroxyester-PEG-polyhydroxyester.

9. Dispersion selon l'une quelconque des revendications ci-avant, où l'agent anti-sédimentation est choisi parmi la quaternium 18-hectorite, un mélange de quaternium 18-hectorite et de carbonate de propylène, et un mélange de quaternium 90-bentonite et de carbonate de propylène.

10. Dispersion selon l'une quelconque des revendications précédentes, où le liquide vecteur est choisi parmi les solvants isoparaffiniques, les fluides hydrocarbonés désaromatisés, les hydrocarbures aromatiques lourds, les huiles de paraffine, le xylène, le phtalate de diisononyle et les polyéther polyols d'oxyde de propylène.

11. Dispersion selon la revendication 10, où le liquide vecteur est choisi parmi les fluides hydrocarbonés aliphatiques désaromatisés.

12. Dispersion selon l'une quelconque des revendications précédentes, où les autres agents de formulation sont choisis parmi un ou plusieurs des suivants : charges inertes, résines ou agents liants.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2003039256 A
- US 5098473 A
- US 5328928 A
- EP 0312723 A
- EP 0746979 A


### Non-patent literature cited in the description


- Dispersion of Powders in Liquids. Applied Science Publishers, 1981